## Europäisches Patentamt

## European Patent Office

## Office européen des brevets

(11) Veröffentlichungsnummer: **0 111 778**
**B1**

(12) **EUROPÄISCHE PATENTSCHRIFT**

(45) Veröffentlichungstag der Patentschrift:
**07.01.87**

(51) Int. Cl.⁴: **B 60 T 7/12**

(21) Anmeldenummer: **83111866.6**

(22) Anmeldetag: **26.11.83**

(54) **Feststell-Bremsanlage.**

(30) Priorität: **16.12.82  DE 3246640**

(43) Veröffentlichungstag der Anmeldung:
**27.06.84 Patentblatt 84/26**

(45) Bekanntmachung des Hinweises auf die Patenterteilung:
**07.01.87 Patentblatt 87/2**

(84) Benannte Vertragsstaaten:
**FR GB IT NL SE**

(56) Entgegenhaltungen:
**DE - A - 1 630 480**
**DE - A - 2 508 375**
**DE - A - 3 020 821**
**US - A - 2 044 944**

(73) Patentinhaber: **M A N Nutzfahrzeuge GmbH, Dachauer Strasse 667 Postfach 50 06 20, D-8000 München 50 (DE)**

(72) Erfinder: **Ladig, Bruno, Vogelloh 62, D-8000 München 50 (DE)**

ACTORUM AG

## Beschreibung

Die Erfindung betrifft eine Feststell-Bremsanlage gemäss dem Oberbegriff des Anspruchs 1. für druckluftgebremste Strassenfahrzeuge.

Bei einer solchen bekannten Bremsanlage befindet sich neben dem Fahrersitz des Fahrzeuges ein Steuerventil, welches einerseits mit einem Druckluft-Vorratsbehälter und andererseits über Leitungen mit einer Bremseinrichtung verbunden ist, welche eine oder mehrere mit einem Federspeicher versehene Bremsen aufweist, welche den Rädern, Achsen oder der Kardanwelle zugeordnet sind.

Das Steuerventil weist zwei Betriebsstellungen auf. In der einen Betriebsstellung sind die Federspeicher der Bremseinrichtung mit dem Druckluft-Behälter verbunden und somit die Bremsen gelöst, während in der anderen der Druckluftspeicher abgesperrt und die Zuleitungen zu den Federspeichern entlüftet sind, wodurch diese entlüftet werden und die Bremsen durch Federkraft eingerückt werden.

Je nach der Grösse bzw. dem Volumen der Bremsanlage nimmt allerdings das Lösen der Bremsen eine gewisse Zeit in Anspruch, weshalb es sich manche Omnibus- und Lkw-Fahrer angewöhnt haben, bei nur kurzzeitigem Verlassen des Fahrzeuges, wenn dieses etwa auf annähernd ebenem Gelände abgestellt ist, nicht das Steuerventil für die Feststell-Bremsanlage zu betätigen, sondern statt dessen einen niedrigen Gang einzulegen und den Motor abzustellen.

Wenn aber jetzt das derart abgestellte Fahrzeug bei Lade- oder Rangierarbeiten einen Stoss erhält oder im Rahmen eines Unfalles ein anderes Fahrzeug auffährt, dann kann der Ruck, mit dem das Fahrzeug kurzzeitig beschleunigt wird, ausreichen, um den Fahrzeugmotor in Gang zu setzen, da solche Fahrzeuge in der Regel mit einem Dieselmotor ausgestattet sind, welcher durch kurzes Andrehen anspringen kann. In diesem Fall macht sich dann das Fahrzeug selbständig, wodurch es zu Unfällen mit grossem Sach- und Personenschaden kommen kann.

Es ist eine Einrichtung (DE-B-1630480) bekannt, bei der der im Sitzkissen des Fahrersitzes angeordnete Schalter aus Metallschichten besteht, die annähernd die Grösse des Sitzkissens aufweisen und an denen zur gegenseitigen Kontaktnahme sich gegenüberliegende Kontaktelemente vorgesehen sind, wobei zwischen den Metallschichten ein elastisches isolierendes Kissenpolster angeordnet ist, das an den Stellen der Kontaktelemente der Metallschichten Löcher aufweist, so dass bei durch Belastung des Sitzkissens zusammengedrücktem Kissenpolster die Kontaktelemente der beiden Metallschichten in Kontakt kommen. Bei dieser Einrichtung ist es notwendig, da der Fahrer bei harten Fahrbahnstössen mitsamt dem abgefederten Sitz hochgeschleudert wird, dass der mit dem Steuerventil gekoppelte Sitzschalter in allen im Betrieb auftretenden Höhenlagen des Sitzes noch seinen Kontakt schliesst. Dies bedeutet, dass der bei stehendem Fahrzeug z.B. nur mit einer Werkzeugtasche belastete Sitz so weit einfedert, dass die Sicherheitsbremse gelöst wird.

Ausgehend von dieser Problemlage liegt der Erfindung die Aufgabe zugrunde, dass sie auch bei der Fahrt über sehr unebene Fahrbahnen benutzbar und voll wirksam ist und auch bei abgestelltem Fahrzeug kein Sicherheitsrisiko entsteht.

Diese Aufgabe wird erfindungsgemäss durch die Merkmale des Anspruchs 1 gelöst.

Bei Fahrzeugen, die nur für den Strassenverkehr bestimmt sind, wird der Fahrersitz während der Fahrt stets durch das Gewicht des Fahrers belastet bleiben; anders ist der Fall bei militärischen und zivilen Fahrzeugen, die auch im Gelände und auf unbefestigten Strassen eingesetzt werden: dort ist es möglich, dass nach dem raschen Durchfahren einer Bodenwelle der Fahrer durch den Fahrbahnstoss so weit hochgeschleudert wird, dass kurzzeitig der Fahrersitz völlig entlastet ist und somit auch erfindungsgemäss das Entlüftungsventil geöffnet wird. Um in solchen Fällen das Einsetzen der Bremswirkung zu verhindern, ist gemäss der Erfindung eine Verzögerungseinrichtung vorgesehen, welche das Entlüften der Bremseinrichtung gegenüber der Freigabe des Fahrersitzes verzögert, soweit dann der Fahrersitz überhaupt noch freigegeben ist.

Eine solche Verzögerungseinrichtung könnte beispielsweise bei elektrischer Ansteuerung des Entlüftungsventils eine Verzögerungsschaltung sein, welche nach Öffnen des Belastungsschalters eine gewisse Zeit verstreichen lässt, bevor das Entlüftungsventil angesteuert wird, vorausgesetzt, der Belastungsschalter ist dann noch immer geöffnet.

Gemäss einer Ausgestaltung der Erfindung ist aber von Vorteil, dass das Entlüftungsventil mit dem Fahrersitz durch ein Gestänge verbunden ist. Ein solcher Fahrersitz ist nämlich in der Regel gegenüber dem Fahrersitzboden abgefedert und legt somit einen Federweg zurück, dessen obere Grenze jedesmal dann und in der Regel nur dann erreicht wird, wenn der Fahrer den Sitz verlassen hat.

Als mechanisches Gestänge kann beispielsweise ein mit dem Entlüftungsventil verbundener Stellhebel dienen, welcher in den Federweg des Fahrersitzes hineinragt und an einer solchen Stelle angebracht ist, dass er vom Teil des Fahrersitzes mitgenommen wird, wenn sich dieser der oberen Grenze seines Federweges nähert.

Der besondere Vorteil dieser Ausgestaltung liegt darin, dass zum Betätigen des Entlüftungsventils keinerlei Stromversorgung notwendig ist, so dass die Verwendung eines mechanischen Steuergestänges besonders betriebssicher ist.

Wenn man den Federweg des gesamten Sitzes ausnutzt, ist dem Prinzip nach auch die nachträgliche Ausstattung eines bereits vorhandenen Fahrzeuges mit der erfindungsgemässen Einrichtung möglich.

Es ist aber auch möglich, am bewegten Sitzteil das Entlüftungsventil anzubringen und im Inneren des Sitzes einen mechanischen Taster anzuordnen, welcher dann ausgelöst wird, wenn der (federnd abgestützte) Sitz durch das Eigengewicht eines Fahrers belastet und somit seine Polsterung ein wenig eingedrückt wird.

Es ist ferner von Vorteil, das Entlüftungsventil derart in den Aufbau des Fahrersitzes zu integrieren, dass das zum Öffnen bzw. Schliessen des Ventiles verwendete Gestänge möglichst allseits von Fahrersitz-Bauteilen umgeben ist, um die versehentliche Betätigung des Entlüftungsventiles auszuschliessen.

Es wäre möglich, im mechanischen Gestänge, welches den Fahrersitz mit dem Entlüftungsventil verbindet, einen pneumatischen Dämpfer anzuordnen.

Gemäss einer Ausgestaltung der Erfindung ist aber die Verzögerungseinrichtung vom Druckluft-Vorratsbehälter gebildet. Wenn das Entlüftungsventil geöffnet wird, bleibt das Steuerventil in einer Stellung, in welcher es den Druckluft-Vorratsbehälter mit den Leitungen verbindet, die zu der eigentlichen Bremseinrichtung führen. Um nun in diesen Leitungen durch das Entlüftungsventil einen Druckabfall zu erzielen, ist es notwendig, auch im Vorratsbehälter den gleichen Druckabfall herbeizuführen, da somit eine grössere Luftmenge durch das Entlüftungsventil nach aussen strömen muss, wird hier durch die angestrebte Verzögerung erreicht. Hierbei kann die Verzögerungszeit durch Einstellen der Auslass-Querschnitte des Entlüftungsventils noch weiter beeinflusst und gesteuert werden.

Wenn nun bei unebener Fahrbahn ein besonders harter Fahrbahnstoss auftritt, welcher den Fahrer so weit hochschleudert, dass er kurzzeitig den Fahrersitz entlastet, dann öffnet zwar das Entlüftungsventil unverzögert, seine Auswirkung auf die Bremseinrichtung wird aber durch den Luftinhalt des Druckluft-Vorratsraumes verzögert.

Es muss der Auslass-Querschnitt des Entlüftungsventiles allerdings auf die Druckluft-Fördermenge abgestimmt werden, mit welcher über den motorgetriebenen Kompressor der Druckluft-Vorratsbehälter wieder aufgefüllt wird.

Es mag bei Reparaturarbeiten erforderlich sein, die Feststellbremse zu lösen, auch wenn keine Person im Fahrersitz befindlich ist. Es wäre nun in diesem Fall einfach möglich, ein einer Person entsprechendes Gewicht auf dem Fahrersitz abzusetzen. Es wird statt dessen aber erfindungsgemäss vorgeschlagen, dass das Entlüftungsventil in Schliessstellung mittels einer Sperre feststellbar ist, so dass das Entlüftungsventil dann eine solche Position einnimmt, als wäre der Fahrersitz belastet.

Gemäss einer weiteren Ausgestaltung der Erfindung ist diese das Entlüftungsventil feststellende Sperre aber derart mit dem Fahrersitz gekoppelt, dass bei erfolgender Belastung des Fahrersitzes diese Sperre sofort gelöst wird. Das heisst, dass nach dem Betätigen der Sperre diese nicht erst besonders gelöst zu werden braucht, sondern sobald sich ein Fahrer auf den Fahrersitz setzt, ist diese Sperre aufgehoben und die ursprüngliche Funktion der erfindungsgemässen Sicherheitseinrichtung wieder hergestellt.

Ein Ausführungsbeispiel der Erfindung ist in der beigefügten schematischen Zeichnung dargestellt. In dieser zeigt das Bezugszeichen 1 die Sitzfläche eines Fahrersitzes 2, in welcher ein Belastungsfühler 3 angeordnet ist.

Der als Stab ausgebildete, vertikal bewegliche Belastungsfühler 3 ist am Ende eines Stellhebels 4 für ein Entlüftungsventil 5 angebracht.

Wenn eine Person auf dem Fahrzeugsitz 2 Platz nimmt, dann drückt sie die Sitzfläche 1 und damit auch den Messfühler 3 nach unten, welcher einerseits den Stellhebel 4 mitnimmt und hierbei das Entlüftungsventil 5 nach aussen hin öffnet.

Dieses Entlüftungsventil 5 ist an zwei Leitungen 6 und 7 angeschlossen und derart eingerichtet, dass es nur bei der Betätigung des Stellhebels 4 diese beiden Leitungen öffnet und ansonsten verschliesst.

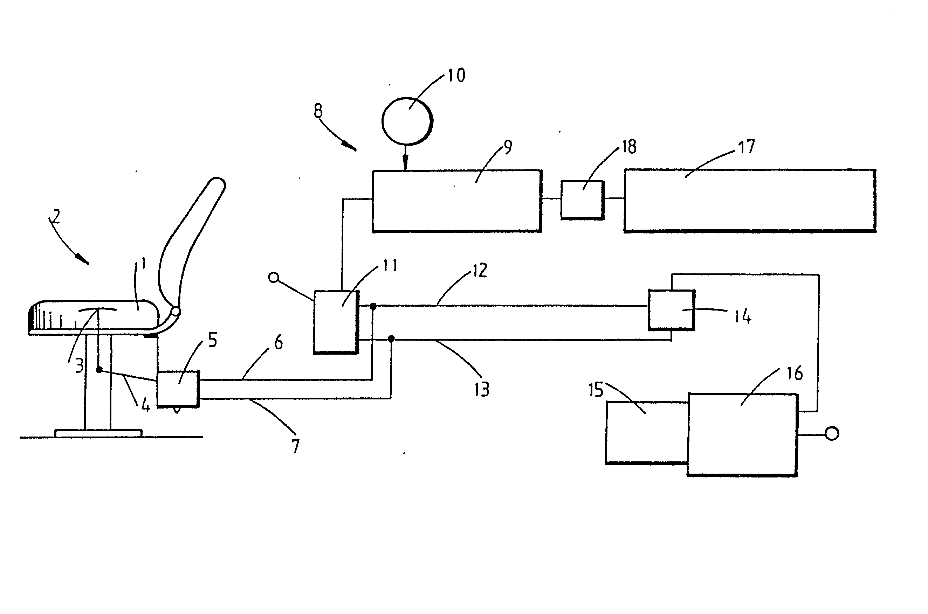

In der Zeichnung ist ferner die übliche Feststell-Bremsanlage 8 für ein Kraftfahrzeug gezeigt, welche einen Feststell-Bremskessel 9 aufweist, welcher mit Luft von einem Kompressor 10 gespeist wird.

Dieser Kessel 9 ist über einen Auslass mit einem Steuerventil 1 verbunden, welches durch einen Handhebel, der in zwei Positionen festlegbar ist, betätigbar ist.

Ferner münden zwei Leitungen, und zwar eine Sperrleitung 12 und eine Federspeicherleitung 13, in das Steuerventil 11.

In der einen unteren Position des Handhebels sind die beiden Leitungen 12, 13 mit dem Kessel 9 verbunden, während in der anderen (oberer) Stellung des Handhebels der Kessel 9 abgesperrt ist und die beiden Leitungen 12 und 13 nach aussen hin offen sind.

Die beiden Leitungen 12, 13 münden in ein Sperrventil 14, welches in unmittelbarer Nähe einer aus Federspeicher 16 und Bremse 15 gebildeten Bremseinrichtung angeordnet ist.

Das Sperrventil 14 ist derart ausgebildet, dass es in den normalen Betriebszuständen der Bremsanlage wirkungslos ist. Lediglich wenn eine der Leitungen 12 oder 13 brechen sollte, dann schliesst das Sperrventil 14, um den augenblicklichen Druckabfall im Federspeicher 16 zu vermeiden. Erst wenn durch den Handhebel das Steuerventil 11 umgeschaltet werden soll, dann öffnet das Sperrventil 14, so dass der Federspeicher 16 entlüftet werden kann.

Der Druckluft-Vorratsbehälter 9 ist zum Erreichen einer längeren Ansprechzeit der Bremse auf das Öffnen des Entlüftungsventiles 5 mit einem Vorratsbehälter 17 verbunden, der zum Betriebsbremskreis des Fahrzeuges gehört.

Um die Betriebssicherheit des Betriebsbremskreises nicht zu gefährden, sind der Vorratsbehälter 9 und der Behälter 17 über ein Absperrventil 18 verbunden, welches bei Unterschreitung eines bestimmten Grenzdruckes, etwa 5,5 bar, selbsttätig schliesst.

Bei der genannten Anordnung beträgt bei vollem Luftvorrat die genannte Ansprechzeit ca. 50 Sekunden, d. h., nach dem Verlassen des Sitzes 2 durch den Fahrer öffnet zwar sofort das Entlüftungsventil 5, es verstreichen aber ca. 50 Sekunden, bis der Federspeicher 16 soweit entlüftet ist, dass dessen Feder auf die Bremse einwirkt und diese zum Ansprechen bringt.

Wird der Sitz 2 kürzere Zeit als die genannten 50 Sekunden belastet, dann reicht diese Zeit nicht aus, um die Bremse zum Ansprechen zu bringen, sondern es wird vielmehr nach dem Schliessen des Entlüftungsventiles 5 infolge der Wirkung des Kompressors 10 der Druck im Kessel 9, den Leitungen 12 und 13 sowie im Federspeicher 16 wieder ansteigen.

## Patentansprüche

1. Feststell-Bremsanlage für druckluftgebremste Strassenfahrzeuge mit, insbesondere gefedertem, Fahrersitz (2), mit einem Druckluft-Vorratsbehälter (9), einer durch Druckluftbeaufschlagung lösbaren Bremseinrichtung (14, 15, 16) und einem mit dieser durch Leitungen (12, 13) verbundenen Steuerventil (11), welches dazu eingerichtet ist, wahlweise die Bremseinrichtung (14, 15, 16) über die Leitungen (12, 13) mit Druckluft aus dem Vorratsbehälter (9) zu beaufschlagen oder bei dessen gleichzeitiger Absperrung zu entlüften, wobei in den Leitungen (12, 13) zwischen dem Steuerventil (11) und der Bremseinrichtung (14, 15, 16) ein Entlüftungsventil (5) zum wahlweisen Entlüften der Bremseinrichtung (14, 15, 16) angeordnet ist, welches mit der Sitzfläche (1) des Fahrersitzes (2) derart gekoppelt ist, dass es bei unbelasteter Sitzfläche geöffnet und bei durch den Fahrer belasteter Sitzfläche geschlossen ist, gekennzeichnet durch eine Verzögerungseinrichtung (9, 17), welche das Entlüften der Bremseinrichtung (14, 15, 16) gegenüber der Freigabe der Sitzfläche (1) des Fahrersitzes (2) verzögert, welche bevorzugt mit dem Entlüftungsventil (5) durch ein Gestänge (3, 4) verbunden ist.

2. Bremsanlage nach Anspruch 1, dadurch gekennzeichnet, dass die Verzögerungseinrichtung vom Druckluft-Vorratsbehälter (9) gbildet ist.

3. Bremsanlage nach einem der Ansprüche 1 oder 2, gekennzeichnet durch eine Sperre zum Feststellen des Entlüftungsventils (5) in Schliessstellung.

4. Bremsanlage nach Anspruch 3, dadurch gekennzeichnet, dass die Sperre zu ihrer Öffnung mit der Sitzfläche (1) des Fahrersitzes (2) verbunden ist.

## Claims

1. A parking brake facility for air-braked road vehicles having: a more particularly sprung driver's seat (2); a compressed air reservoir (9); a brake system (14 – 16) releasable by compressed air actuation; and a control valve (11) which is connected to the brake system (14 – 16) by lines (12, 13) and which is adapted at choice to supply the brake system (14 – 16) with compressed air from the reservoir (9) by way of the lines (12, 13) or to vent the brake system (14 – 16) with simultaneous closure of the reservoir (9) , a venting valve (5) for selective venting of the brake system (14 – 16) being disposed in the lines (12, 13) between the control valve (11) and the brake system (14 – 16), such valve being so coupled with the seating surface (1) of the driver's seat (2) as to be in the open state in the absence of load on such surface and to be in the closed state when the driver sits on the seating surface, characterised by delay means (9, 17) for delaying the venting of the brake system (14 – 16) in relation to the release of the seating surface (1) of the driver's seat (2), the delay means preferably being connected to the venting valve (5) by linkage (3, 4).

2. A installation according to claim 1, characterised in that the delay means are the compressed air reservoir (9).

3. An installation according to claim 1 and/or 2, characterised by locking means to secure the venting valve (5) in its closed position.

4. An installation according to claim 3, characterised in that the locking means are connected for opening to the seating surface (1) of the driver's seat (2).

## Revendications

1. Système de frein de stationnement pour véhicules routiers à frein pneumatique avec un siège de conducteur (2), notamment suspendu, avec un réservoir (9) d'accumulation d'air comprimé, un dispositif de freinage (14, 15, 16) pouvant être desserré par sollicitation par air comprimé et une soupape de commande (11) reliée à ce dispositif par des canalisations (12, 13), cette soupape étant agencée pour, sélectivement, solliciter par de l'air comprimé provenant du réservoir d'accumulation (9) le dispositif de freinage (14, 15, 16) par l'intermédiaire des canalisations (12, 13) ou pour mettre ce dispositif à la décharge en fermant simultanément le réservoir, une soupape de décharge (5) étant disposée dans les canalisations (12, 13) entre la soupape de commande (11) et le dispositif de freinage (14, 15, 16) pour la mise à la décharge sélective du dispositif de freinage (14, 15, 16), cette soupape de décharge étant accouplée avec la surface de siège (1) du siège (2) du conducteur de manière qu'elle soit ouverte lorsque la surface de siège n'est pas chargée et qu'elle soit fermée lorsque cette surface de siège est chargée par le conducteur, caractérisé par un dispositif de retardement (9, 17) qui retarde la mise à la décharge du dispositif de freinage par rapport à la libération de la surface de siège (1) du siège (2) du conducteur, cette surface étant de préférence reliée à la soupape de décharge (5) par un système de tringles (3, 4).

2. Système de frein selon la revendication 1, caractérisé en co que le dispositif de retardement est constitué par le réservoir (9) d'accumulation d'air comprimé.

3. Système de frein selon la revendication 1 ou 2, caractérisé par un organe d'arrêt pour maintenir la soupape de décharge (5) en position de fermeture.

4. Système de frein selon la revendication 3, caractérisé en ce que l'organe d'arrêt est, pour son ouverture, relié à la surface de siège (1) du siège (2) du conducteur.